Europäisches Patentamt

European Patent Office

Office européen des brevets

(11) Veröffentlichungsnummer: **0 176 808**
**A1**

(12) **EUROPÄISCHE PATENTANMELDUNG**

(21) Anmeldenummer: **85111326.6**

(22) Anmeldetag: **07.09.85**

(51) Int. Cl.⁴: **G 01 B 7/06**

(30) Priorität: **29.09.84 DE 3435860**

(43) Veröffentlichungstag der Anmeldung:
**09.04.86 Patentblatt 86/15**

(84) Benannte Vertragsstaaten:
**AT BE CH FR GB IT LI LU NL SE**

(71) Anmelder: **RSM Regel-, Steuer- und Messtechnik GmbH**
**Leostrasse 84**
**D-4000 Düsseldorf 11(DE)**

(72) Erfinder: **Pander, Peter**
**Leostrasse 84**
**D-4000 Düsseldorf 11(DE)**

(74) Vertreter: **Patentanwaltsbüro Cohausz & Florack**
**Postfach 14 01 47**
**D-4000 Düsseldorf 1(DE)**

(54) **Dickenmessgerät für Folien, insbesondere als gefaltete Schläuche.**

(57) Die Erfindung bezieht sich auf ein Dickenmeßgerät für Folien, insbesondere als gefaltete Schläuche, die von einem Extruder mit rotierender oder oszillierender Düse oder oszillierendem Abzug hergestellt werden und gefaltet über eine Führungsrolle (2) laufen. Um dieDicke des Schlauches zu erfassen, sind zwei Signalgeber (5,7) vorgesehen, von denen der eine mit seinem Fühler (4) die Oberfläche der Rolle (2) und der andere die Oberfläche des Folienbandes (1) abtastet. Die beiden von den Signalgebern gelieferten Signale werden miteinander in einer Auswerteinrichtung (8) verglichen, wobei das Signal des der Rolle (2) zugeordneten Signalgebers als Referenzsignal benutzt wird.

Fig. 1

Croydon Printing Company Ltd.

EP 0 176 808 A1

# COHAUSZ & FLORACK    0176808

## PATENTANWALTSBÜRO

### SCHUMANNSTR. 97 D-4000 DÜSSELDORF 1

Telefon: (02 11) 68 33 46                    Telex: 0858 6513 cop d

PATENTANWALTE

Dipl.-Ing. W. COHAUSZ · Dipl.-Ing. R. KNAUF · Dipl.-Ing. H. B. COHAUSZ · Dipl.-Ing. D. H. WERNER

5. September 1985

Anm.: Fa. RSM Regel-, Steuer- und Meßtechnik GmbH
Leostr. 84, 4000 Düsseldorf 11

Dickenmeßgerät für Folien, insbesondere
als gefaltete Schläuche

Die Erfindung bezieht sich auf ein Dickenmeßgerät für Folien, insbesondere als gefaltete Schläuche, die von einem Extruder erzeugt und über eine Rolle geführt werden.

Beim Extrudieren von Bändern ist die Kenntnis der Dicke des als einfaches Band, insbesondere aber als gefalteter Schlauch, von dem Extruder hergestellten Folie wichtig. Bekannte Dickenmeßgeräte arbeiten beispielsweise mit Infrarot- oder radioaktiver Strahlung oder kapazitiv. Dabei erfolgt die Messung quer über die Folie, so daß ein Profil der Dicke der Folie gewonnen wird. Solche Dickenmeßgeräte sind aufwendig und müssen in aufwendiger Weise geeicht werden, da sie nur die relative Dicke erfassen können.

Der Erfindung liegt die Aufgabe zugrunde, ein wesentlich einfacheres Dickenmeßgerät zu schaffen, mit dem die Dicke der Folie absolut gemessen werden kann.

K/Tn.- 44 157

- 2 -

0176808.

Diese Aufgabe wird erfindungsgemäß durch zwei Signalgeber und eine Auswerteinrichtung für die von den Signalgebern gelieferten Signale gelöst, wobei der Signalgeber ein von der Oberfläche der Rolle anhängiges Referenzsignal und der andere Signalgeber ein von der Dicke des über die Rolle laufenden Folienbandes abhängiges Signal liefert und die Auswerteinrichtung aus der Differenz dieser Signale eine Anzeige für die Dicke der Folie bildet.

Aufgrund der Differenzmessung der von beiden Signalgebern gelieferten Signale werden Unregelmäßigkeiten der Oberfläche der Walze, die auch beim auf die Oberfläche der Folie ansprechenden Signalgeber erfaßt werden, eliminiert, so daß das Differenzsignal ein Maß für die tatsächliche Dicke der Folie ist. Der der Oberfläche der Folie zugeordnete Signalgeber sollte die Folie möglichst nahe am Rand erfassen, so daß bei Doppellage der Folie nicht eine dünne Stelle in der einen Lage durch eine dicke Stelle in der anderen Lage kompensiert wird. Am Rand liegen die beiden vom Signalgeber erfaßten Stellen so dicht beienander, daß zwischen diesen beiden Stellen keine großen Dickenunterschiede vorhanden sind. Aus dem gleichen Grunde sollten die Signalgeber örtlich möglichst nahe beieinander angeordnet sein. Da bei der Herstellung einer Folie durch den Extruder die Extruderdüse rotiert oder oszilliert oder der Abzug oszilliert, wird selbst bei ortsfester Anordnung des Signalgebers bzw. seines Fühlers der Schlauch über seine ganze Breite in der Dicke erfaßt. Der Fühler des Signalgebers tastet einen derart hergestellten Schlauch auf einer Schraubenlinie ab.

Die Signalgeber können nach der Erfindung eine verschiedene Ausgestaltung haben. Bevorzugt wird eine Ausgestaltung, bei der die Signalgeber als Impulsgeber ausgebildet sind, deren Impulsfrequenz der Bahngeschwindigkeit proportional ist. Diese Ausgestaltung läßt sich auf einfache Art und Weise über die digitalen Signale der Impulsgeber, die die Differenz bilden, die das Maß für die Dicke des Bandes ist, erreichen.

Nach einer weiteren Ausgestaltung können die Signalgeber Tachogeneratoren sein, die von den Bahngeschwindigkeiten der Oberfläche abhängige Spannungssignale liefern.

Nach einer weiteren Ausgestaltung sind die Signalgeber die Oberfläche an möglichst nahe benachbarten Orten abtastende, als Kraftaufnehmer auf Dehnungsmeßstreifenbasis ausgebildete Fühler. Bei solchen Fühlern wird die Änderung des elektrischen Widerstandes des oder der Dehnungsmeßstreifen als Maß für die Dicke der Folie ausgewertet. Es ist aber auch möglich, daß diese Fühler jeweils auf eine Spule eines Differentialtransformators einwirken. Auf diese Art und Weise kann das Frequenzverhalten des Differentialtransformators und gegebenenfalls seiner Dämpfung beeinflußt werden, was meßtechnisch als Maß für die Dicke der Folie ausgewertet werden kann.

Sofern die Bahngeschwindigkeit für die Messung erfaßt wird, sollte dem Signalgeber eine auf der Oberfläche der Walze und der Oberfläche der Folie laufende Laufrolle zugeordnet sein. Die Laufrolle kann allerdings auch bei den anderen Signalgebern an Stelle von schleifend aufliegenden Fühlern vorgesehen sein.

Im folgenden wird die Erfindung anhand einer zwei Ausführungsbeispiele darstellenden Zeichnung näher erläutert. Im einzelnen zeigen

Fig. 1                  ein Dickenmeßgerät mit Impulsgebern
                        als Signalgeber und

Fig. 2                  ein Dickenmeßgerät mit auf Dehnungs-
                        meßstreifenbasis arbeitenden Kraftauf-
                        nehmern als Signalgeber.

Die von einem Extruder mit rotierender oder oszillierender Düse oder oszillierendem Abzug hergestellte schlauchförmige Folie wird gefaltet und über eine Rolle 2 im
Gleichlauf geführt. Auf der Rollenoberfläche 3 am Rand
ist eine Rolle 4 eines Impulsgebers 5 aufgesetzt. Unmittelbar daneben, aber auf der Oberfläche des schlauchförmigen Folienbandes 1, ebenfalls am Rand, ist eine Laufrolle 6 eines Impulsgebers 7 aufgesetzt. Die Rollen 4, 6
und die Impulsgeber 5, 7 bilden die beiden Signalgeber.
Beide Signalgeber 4 bis 7 haben den gleichen Aufbau und
liefern von der Umfangsgeschwindigkeit der Rolle 3 bzw.
der Bahngeschwindigkeit des Folienbandes 1 in der Frequenz abhängige Impulse an eine Auswerteinrichtung 8.
Diese Auswerteinrichtung 8 vergleicht diese Impulse miteinander. Sofern die von den Impulsgebern 5, 7 erfaßten
Geschwindigkeiten gleich sind, was beispielsweise bei
fehlendem Folienband 1 der Fall ist, ist die Impulsfrequenz gleich und die Auswerteinrichtung 8 zeigt dementsprechend die Banddicke 0 an. Sofern jedoch über die
Rolle 2 ein Folienband 1 läuft, ist die Impulsfrequenz
des Signalgebers 6, 7 größer als die des Signalgebers 4, 5, so daß eine Dicke angezeigt wird. Die
Differenz der Impulsfrequenzen ist deshalb ein Maß für
die Dicke der Folie.

Die Signalgeber 4 bis 7 können auch als Tachogeneratoren
ausgebildet sein. In diesem Fall muß die Auswerteinrichtung 8 für den Vergleich von Spannungssignalen eingerichtet sein.

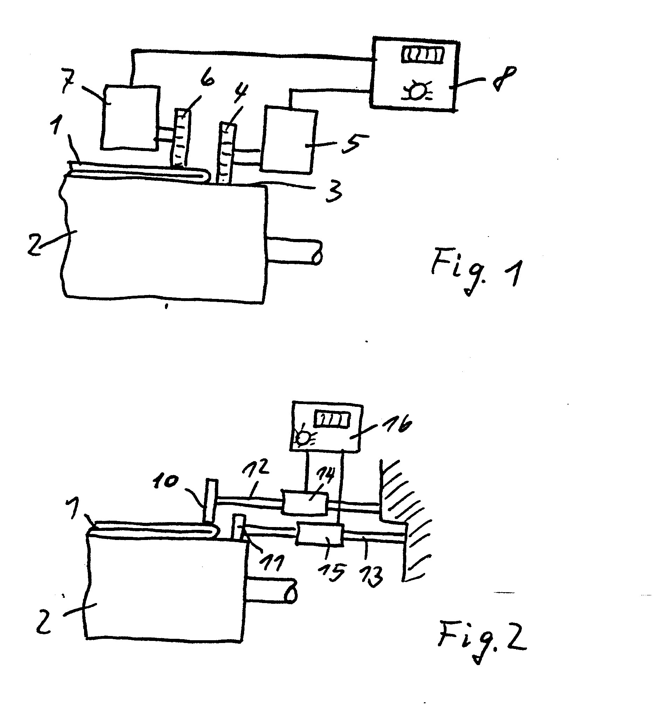

Beim Ausführungsbeispiel der Fig. 2 werden die Oberflächen der Rolle 2 und des Folienbandes 1 von gleichartigen Signalgebern mittels Fühlerrollen 10, 11 abgetastet. Die Fühlerrollen sind an gleich langen, am anderen Ende fest eingespannten, Hebelarmen 12, 13 angeordnet, auf denen Kraftaufnehmer 14, 15, die auf Dehnungsmeßstreifenbasis arbeiten, angeordnet sind. Die Fühlerrollen 10, 11, die Hebelarme 12, 13 und die Kraftaufnehmer 14, 15 bilden die beiden Signalgeber. Die Kraftaufnehmer 14, 15 sprechen auf die Verlagerung der Fühlerrollen 10, 11 durch die Oberfläche der Rolle 2 selbst bzw. des Folienbandes 1 an. Auch in diesem Fall liefern die beiden Kraftaufnehmer 14, 15 an eine Auswerteinrichtung 16 Signale, die die Auswerteinrichtung 16 vergleicht. Bei gleichem Aufbau zeigt die Auswerteinrichtung 16 die Dicke O an, wenn die Rolle 10 kein Folienband 1 erfaßt, also auf der Oberfläche der Rolle 2 läuft. Sobald jedoch die Rolle 10 durch das Folienband 1 angehoben wird, liefert der Kraftaufnehmer 14 ein anderes Signal als der Kraftaufnehmer 15 an die Auswerteinrichtung 16. Die Differenz entspricht der Dicke des Folienbandes 1. Höhenschwankungen der Oberfläche der Walze 2 werden wegen der eng benachbart angeordneten Rollen 10, 11 in gleicher Weise von den beiden Kraftaufnehmer 14, 15 erfaßt und somit selbsttätig in der Auswerteinrichtung ausgeglichen, so daß nur die tatsächliche Dicke des Folienbandes 1 als Meßergebnis ausgewiesen wird.

Wie bereits ausgeführt, wird bei dem Folienband 1 in Form eines Schlauches, das von einem Extruder mit rotierender oder oszillierender Düse oder oszillierendem Abzug hergestellt wird, auch bei stationärer Anordnung desSignalgebers die Dicke der Folien festgestellt, weil das durch die Düse bestimmte Profil aufgrund der Oszillation oder Rotation über den Umfang des Schlauches wandert. Bei einer einfach gelegten Folie läßt sich mit dem Meßgerät des Ausführungsbeispiels der Fi. 1 das Querprofil des Bandes aber auch dann messen, wenn die vorstehende Voraussetzung nicht erfüllt ist. In diesem Fall ist es allerdings erforderlich, daß der Signalgeber 6, 7 quer über die Folie gefahren wird (traversiert). Sofern unterstellt wird, daß die Oberfläche der Rolle 2 keine Unebenheiten hat, ist auch in diesem Fall die Meßgenauigkeit gut. Sofern jedoch Unebenheiten berücksichtigt werden müssen, kann dies dadurch geschehen, daß der Signalgeber 4, 5 für das Referenzsignal unterhalb der Führungsebene der Folie 1 die Walzenoberfläche abtastet und zusammen mit dem Signalgeber 6, 7 synchron traversiert.

**PATENTANWALTSBÜRO**

SCHUMANNSTR. 97  D-4000 DÜSSELDORF 1

Telefon: (02 11) 68 33 46          Telex: 0858 6513 cop d

PATENTANWALTE

Dipl.-Ing. W COHAUSZ · Dipl.-Ing. R. KNAUF · Dipl.-Ing. H. B COHAUSZ · Dipl.-Ing. D. H. WERNER

- 7 -

Ansprüche:

1. Dickenmeßgerät für Folien, insbesondere als gefaltete Schläuche, die von einem Extruder erzeugt und über eine Rolle geführt werden, **g e k e n n z e i c h n e t   d u r c h** zwei Signalgeber (4-7, 10-15) und eine Auswerteinrichtung (8,16) für die von den Signalgebern (4-7, 10-15) gelieferten Signale, wobei der eine Signalgeber (5,15) ein von der Oberfläche der Rolle (2) abhängiges Referenzsignal und der andere Signalgeber (7,14) ein von der Dicke des auf der Rolle laufenden Folienbandes (1) abhängiges Signal liefert und die Auswerteinrichtung (8,16) aus der Differenz dieser Signale eine Anzeige für die Dicke der Folie (1) bildet.

2. Dickenmeßgerät nach Anspruch 1, **d a d u r c h   g e k e n n z e i c h n e t ,** daß die Signalgeber (4-7) als Impulsgeber ausgebildet sind, deren Impulsfrequenz der Bahngeschwindigkeit proportional ist.

3. Dickenmeßgerät nach Anspruch 1, **d a d u r c h   g e k e n n z e i c h n e t ,** daß die Signalgeber (4-) Tachogeneratoren sind, die von den Bahngeschwindigkeiten der Oberfläche des Folienbandes (1) und der Rolle (2) abhängige Spannungssignale liefern.

K/Tn.- 44 157

4.   Dickenmeßgerät nach Anspruch 1,
d a d u r c h   g e k e n n z e i c h n e t ,
daß die Signalgeber (10-15) die Oberfläche des Folienbandes (1) von der Rolle (2) an möglichst nah benachbarten Orten abtastende, jeweils einen Kraftaufnehmer
auf Dehnungsmeßstreifenbasis aufweisende Fühler sind.

5.   Dickenmeßgerät nachAnspruch 1,
d a d u r c h   g e k e n n z e i c h n e t ,
daß die Signalgeber (4-7, 10-15) die Oberfläche des
Folienbandes (1) und der Rolle (2) an möglichst nah benachbarten Orten abtastende, jeweils auf die Spulen
eines Differentialtransformators verstellend einwirkende Fühler sind.

6.   Dickenmeßgerät nach einem der Ansprüche 2 bis 5,
d a d u r c h   g e k e n n z e i c h n e t ,
daß mindestens der die Oberfläche des Folienbandes (1)
abtastende Signalgeber (6,7) als Fühler eine  Laufrolle
(6) hat.

Fig. 1

Fig. 2

## EINSCHLÄGIGE DOKUMENTE

EP 85111326.6

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE - A1 - 3 039 532 (GEBR. BÜHLER) | 1 | G 01 B  7/06 |
| Y | * Zusammenfassung; Fig. 1 * | 5,6 | |
| | -- | | |
| Y | US - A - 4 271 699 (WILLIAMSON) | 5,6 | |
| | * Gesamt * | | |
| | -- | | |
| Y | DE - C - 876 158 (GUMMIWERKE FULDA) | 1,2,3 | |
| | * Gesamt * | | |
| | -- | | |
| Y | DE - A - 2 140 639 (DAVY) | 1,2,3 | |
| | * Gesamt * | | |
| | -- | | |
| A | DE - C - 919 073 (PERTHEN) | | |
| | * Gesamt * | | **RECHERCHIERTE SACHGEBIETE (Int Cl 4)** |
| | -- | | |
| A | DE - A - 2 633 351 (HOESCH) | | G 01 B  5/00 |
| | * Gesamt * | | G 01 B  7/00 |
| | -- | | G 01 B 21/00 |
| A | US - A - 2 730 807 (COLLINS) | | |
| | * Gesamt * | | |
| | ---- | | |

Der vorliegende Recherchenbericht wurde für alle Patentansprüche erstellt.

| Recherchenort | Abschlußdatum der Recherche | Prüfer |
|---|---|---|
| WIEN | 03-12-1985 | TOMASELLI |